# EUROPEAN PATENT SPECIFICATION

(11) **EP 4 593 759 B1**
(45) Date of publication and mention of the grant of the patent: **16.09.2026**
(21) Application number: 23782868.6
(22) Date of filing: 27.09.2023
(51) Int. Cl.: A61C 8/00

(54) **DEVICE FOR SURGERY WHEN PREPARING FOR DENTAL IMPLANTS**
VORRICHTUNG FÜR DIE CHIRURGIE BEI DER VORBEREITUNG VON ZAHNIMPLANTATEN
DISPOSITIF DE CHIRURGIE LORS DE LA PRÉPARATION D'IMPLANTS DENTAIRES

(30) Priority: 28.09.2022 EP 22382893
(43) Date of publication of application: 06.08.2025
(73) Proprietor: Sala Meseguer, Juan Carlos, 03001 Alicante (ES)
(72) Inventor: Sala Meseguer, Juan Carlos, 03001 Alicante (ES)
(74) Representative: KIPA AB
(86) International application number: PCT/EP2023/076818
(87) International publication number: WO 2024/068802

(56) References cited:
- EP-A1- 3 618 753
- WO-A1-03/071978
- WO-A1-2010/028811
- WO-A1-2018/071863
- CH-A1- 706 593
- US-A- 5 569 035

## Description

### TECHNICAL FIELD

The present invention relates to a device for preparing for dental implants comprising an elongate structure that has a first end with a tip. A set of cutting fins are arranged on the structure adjacent the first end and a second end with a connecting part is adapted to be coupled to a rotating device for rotating the device such that the first end of the elongate structure is arranged coaxially inside a cylinder element.

### BACKGROUND

There are devices available for removing soft (mucous) and hard (bone) tissues for use in a surgical, medical or other environment where soft tissue or crushed bone particles need to be removed for autografting.

Ground bone particles can be used in a variety of medical and surgical procedures. For example, finely ground bone particles can be used for spinal fusions, to repair defects caused by trauma, microsurgery, oral and maxillofacial surgery, dental surgery, transplant surgery or tissue banking.

Currently, a surgeon can remove a portion of bone from a patient, grind the portion into fairly homogeneous particles using a hand-held rasp, and use the bone particles to fill and repair another area of bone, such as in the patient's spine, skull, maxilla or mandible.

The step of grinding the bone portion using a hand rasp is a relatively long and strenuous operation, with mixed results as it depends on the type of bone, the scraper and the skill of the operator.

As well as the scraper there are other instruments used in surgery, such as the use of a conventional trephine, here the surgeon obtains a cylinder of compact bone, which must be crushed by using a grinder or grinder, to obtain smaller pieces of bone and place it in the area to be repaired, therefore the instruments used must be sterile and maintain a sterile environment during the surgical procedure.

Normally, a surgical instrument is sterilised before and/or after the surgical procedure to disinfect it and remove any toxic residues and other contaminants. In the current state of the art, tools for preparing for dental implants are well known, which generally comprise a tubular body that has a sharp edge for cutting the gum through the immediate loading process.

Specifically, the immediate loading process is a process in which the dental prosthesis is installed immediately after the surgical procedure.

The problem with this type of tool is that they do not cleanly, precisely and rigidly cut the patient's gums, causing the cut to be sutured incorrectly and there are bleeding problems during the procedure and after surgery.

Instruments such as a hand-operated scaler or electric grinder are usually disassembled, sterilized by autoclaving or other sterilization procedure and then reassembled. This process also introduces an element of time and expense that must be factored into the surgical procedure.

In addition, scrapers and trephines in general have certain deficiencies. Most of the time, they are wasteful, as it is difficult to remove all bone particles from them. In addition, growth factors inherent to bone tissue can be lost, and there is no way to mix various additives to the bone particles, such as bone-inducing materials that promote bone growth, during the removal and repair process.

As for the soft tissue extraction device, it is a minimally invasive instrumentation that allows the removal of any epithelial, mucosal or submucosal tissue and even from deeper planes. Its structure and design is the same as that of the hard tissue extraction device, changing only the external tubular structure.

ES1136608U describes a tool for preparing for dental implants, which integrates two independent pieces that are coaxially coupled to each other in a detachable way by threads, such that, the tool includes two cutting fins.

Although this device solves the problem related to cutting precision and also the lack of rigidity, it maintains the problem related to precision, cortical regularization, self-centering and knowing the spatial relationship of neighboring pieces.

Hence, the object of the present disclosure is to provide a tool that at least alleviates some of the issues of prior art tools.

CH 706593A1 relates to a drilling device for surgical use for adjusting the drilling depth into a human bone, comprising a drill and a stopper sleeve to be arranged on the drill, which can be stably positioned at various selectable depth settings. Offset of the clearances may depend on a number of cutting edges on a drill and may be 120° for three cutting edges.

EP 3618753 A0 (WO 2018202605 A1) may relate to a dental drill formed of titanium or a titanium alloy having a hardness greater than pure titanium, said drill extending along a central axis from a proximal end to a distal end. The drill comprises a shank arranged in a proximal end region of the drill and extending along the central axis, a flute portion arranged distally to and running coaxially with the shank, said flute portion comprising two or more flutes extending along the flute portion and being interposed by lands, the flute portion further comprising a central solid web and a drill tip directly adjoining the distal end of the flute portion and comprising two or more flanks which taper radially inwardly from the distal end of each land in the distal direction toward the central axis, each flank comprising a cutting edge.

WO 2018071863 A1 relates to a surgical tool assembly for forming holes in bone at precise locations to controlled depths. The hole forming tool has a leading apical tip and a shank. The shank includes an annular groove at a predetermined distance from the apical tip. An adjustable telescopic stop is coupled to the shank. The telescopic stop includes an indexing gauge supporting a tubular key. The key includes an integrated impeller that accentuates irrigation of the treatment site during surgical procedures. The adjustable telescopic stop may be used in combination with a guided surgery jig. The jig includes a guide bushing having a generally semicylindrical alignment valley adapted to receive the spinning key of the telescopic stop.

The alignment valley includes a full annular internal abutment step adapted to engage the key when the apical tip reaches a predetermined penetration depth in the bone.

### SUMMARY

The invention is as defined in the appended claims.

According to a first aspect of the present disclosure a device for preparing for dental implants comprises an elongate structure that has a first end with a tip, wherein a set of cutting fins are arranged on the structure adjacent the first end. Further, a second end with a connecting part is adapted to be coupled to a rotating device for rotating the device such that the first end of the elongate structure is arranged coaxially inside a cylinder element. The set of cutting fins comprises three fins evenly arranged around the elongate structure at an angle of 120° between them, wherein the outer ends of the cutting fins are linked to the inner surface of the cylinder element.

The fins grind the cut material into smaller particles, for use in a sterile surgical environment, and a coupling such as a rotating shaft for connection to an electromechanical or pneumatic system.

The device further comprises a second set with three cutting fins arranged around the elongate structure at an angle of 120° between them and arranged between the first set of cutting fins and the second end at a distance from the first set of cutting fins.

According to another aspect of the present disclosure, the hardness of the fins of the second set compared to the first set differ for better handling of varying hardness of bones without having to dismantle and switch the fins.

The fins of the two sets are according to a further aspect of the present disclosure arranged around the elongate structure such that the fins of the first set is arranged at a rotational angle of 60° relative the fins of the second set.

According to yet a further aspect of the present disclosure the cutting fins have cutting edges towards the first end of the elongate structure.

According to another aspect of the present invention the cutting fins comprise truncated pyramidal bodies with rectangular bases arranged towards the second end of the device and further comprise slanted lateral faces and top surfaces of the cutting edges arranged towards the first end of the device.

The lateral faces of the truncated pyramidal bodies are according to one aspect of the present disclosure curved concave planes.

According to yet another aspect of the present disclosure the first end of the elongate structure has an annular extension, the cylinder element having an internal space and a seat extending inwardly from the inner surface of the cylinder element and corresponding to the annular extension, wherein the cylinder element and the annular extension are arranged such that coaxial movement of the cylinder element relative the elongate structure is limited upon contact between the annular extension and the seat .

According to a further aspect of the present disclosure the cylinder element has distance markings for facilitating for the surgeon to help seeing how deep the device has been inserted.

According to one aspect of the present invention the first end of the elongate structure and cylinder element have respective threaded surfaces, such that the elongate structure and the cylinder element are arranged to be screwed together such that the first end of the elongate structure is disposed coaxially inside the bushing.

According to an alternative aspect of the present disclosure the first end of the elongate structure and the cylinder element have respective adherent surfaces, such that the first end of the elongate structure is joined coaxially inside the cylinder element.

It should be emphasized that the term "comprises/comprising" when used in this specification is taken to specify the presence of stated features, integers, steps or components but does not preclude the presence or addition of one or more other features, integers, steps, components or groups thereof.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 shows an exploded view of an embodiment of the device made according to the object of the present invention.
Figure 2 shows a view of the assembled device assembly according to the embodiment illustrated in figure 1.
Figure 3 shows a sectional cut (B-B) of figure 2, corresponding to the end of the cylinder element of the device.
Figure 4 shows a detailed view of the cutting fins of the device.
Figure 5 shows a view of a further embodiment of the device.
Figure 6 shows a view of the device made in accordance with the object of the further embodiment of the invention, where distance marking is included on the device.
Figure 7 is a axial view showing the cutting fins of the first and second set.
Figure 8 shows the first steps followed during the use of the device of the present invention.
Figure 9 shows the last stages followed during the use of the device of the present invention.
Figure 10 is a side view of a further embodiment of the device.
Figure 11 shows the embodiment in figure 10 in assembled state.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

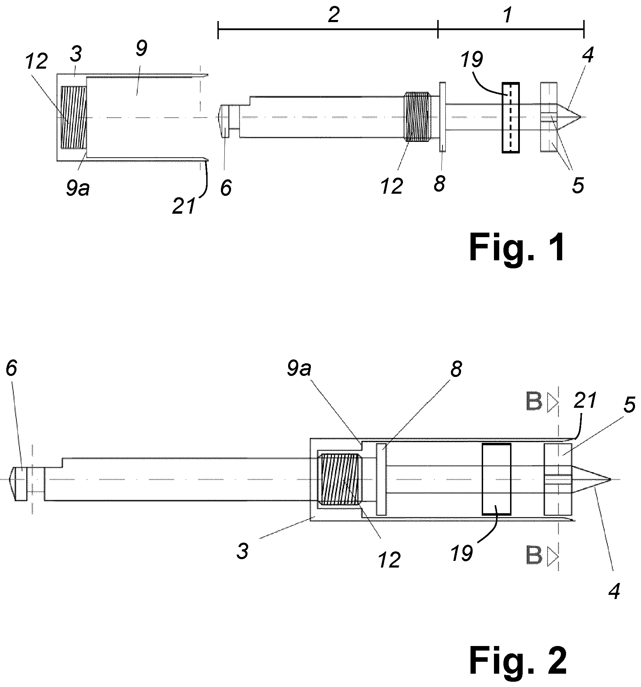

With reference to figure 1 the elongate structure has a first end 1 made up of a tip 4 associated with cutting fins 5, and a second end 2 associated with a connecting part 6 for coupling to a rotating device that drives the device. As detailed above, the cutting fins 5 are arranged at an angle of 120° between them, where the outer ends 10 of the cutting fins 5 are linked to the internal surface of the cylinder element 3.

Thus, in figure 2 it can be seen how, in a preferred embodiment, the first end 1 of the tubular structure and the bushing 3 have respective threaded surfaces 12, so that the first end 1 of the structure tubular is disposed coaxially inside the bushing 3 by threading.

As also can be seen in figures 1 and 2 the device comprises a second set 19 with three cutting fins arranged around the elongate structure at an angle of 120° between them and arranged between the first set of cutting fins 5 and the second end 2 at a distance from the first set of cutting fins 5.

The hardness of the fins of the second set 19 compared to the first set 5 may differ for better handling of varying hardness of bones without having to dismantle and switch the fins.

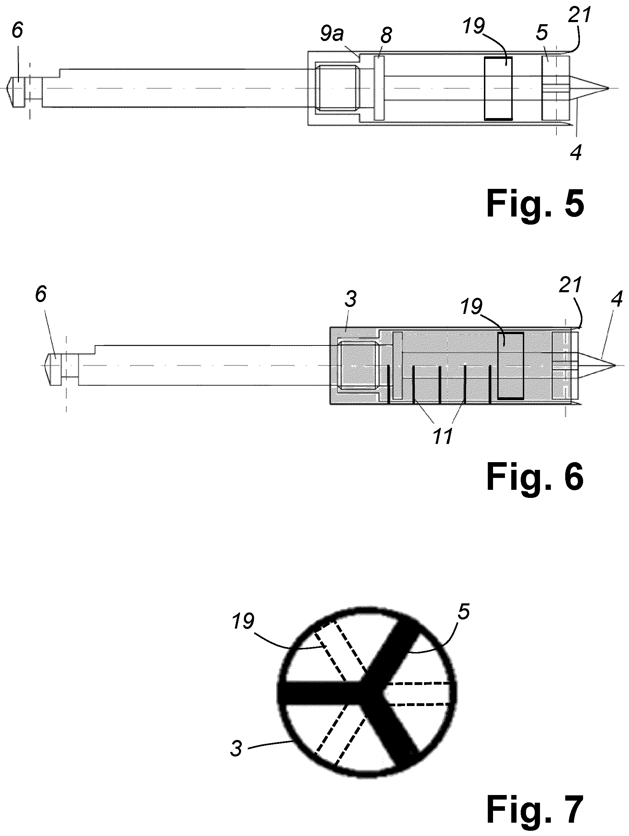

The fins of the two sets 5, 19 are arranged around the elongate structure such that the fins of the first set 5 is arranged at a rotational angle of 60° relative the fins of the second set 19, see figure 7.

On the other hand, in figure 5 a second embodiment is shown where the first end 1 of the elongate structure and the cylinder element 3 have respective adherent surfaces so that the first end 1 of the elongate structure is joined coaxially inside the cylinder element 3. The cylinder element 3 and the elongate structure remain associated with each other, generating a sealed inner surface that prevents the accumulation of dirt.

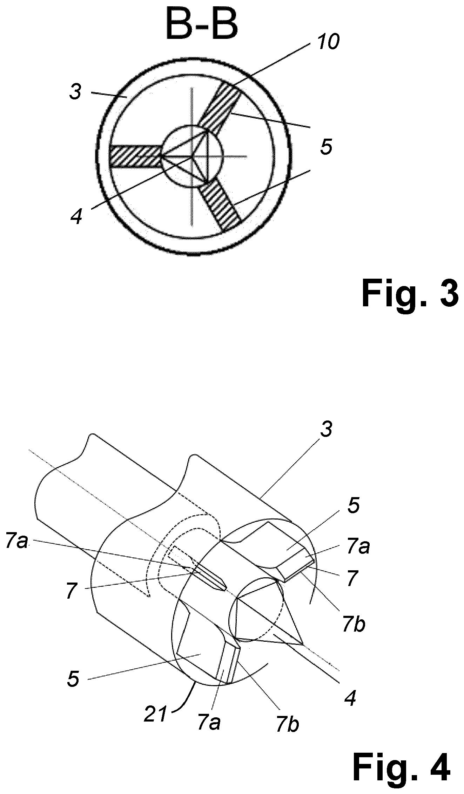

Additionally, figure 4 shows a perspective detail of the first end 1 of the elongate structure, where the cutting fins 5 of the first set, arranged on the first end 1 of the elongate structure, incorporate cutting edges 7 that provide robustness to the assembly and allow cutting and extraction to be carried out in a single step.

In this sense, in figure 3, it is observed that the cutting edges 7 of the cutting fins 5 comprise truncated-pyramidal bodies with rectangular bases. The two slanted lateral faces 7a are made up of two concave planes, while the flat edges of the said truncated pyramidal bodies constitute the top surfaces 7b of the cutting edges 7 during the rotation of the device. Advantageously, this configuration favors the extraction of the parts of the gum that are being cut during the surgical procedure.

It should be noted that, as can be seen in figures 1, 2 and 5, in both embodiments, the configuration of the inner surface of the cylinder element 3 has a recess 9 that generates an internal seat 9a. On the other hand, the first end 1 of the elongate structure has an annular extension 8 so that when combined with the internal seat 9a butting against it, the cylinder element 3 is immobilized and thus fixed in a more stable way.

Figure 6 shows how the cylinder element 3 has an engraving as distance markings 11 that, when carrying out the surgical operation, allows the user to carry out the process of cutting and extracting the gum from a guided and precise way. This engraving may optionally be included in any of the embodiments of the invention.

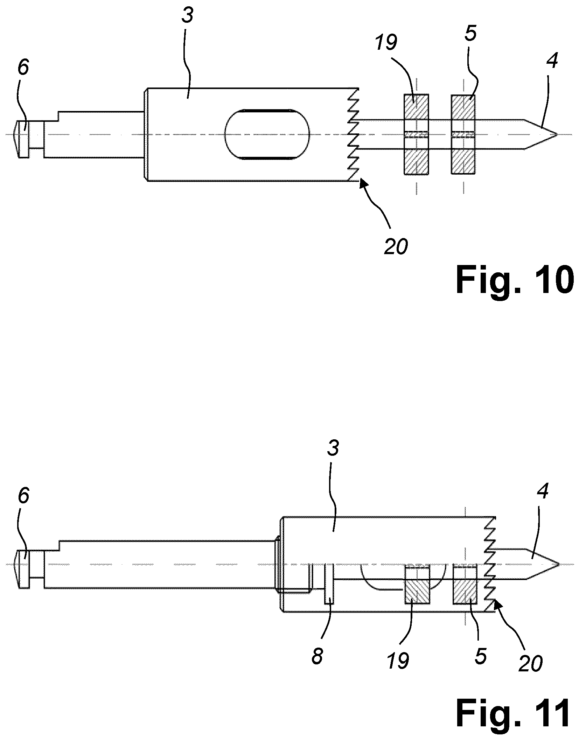

Turning to figures 10 and 11, a further embodiment of the device is shown where the cylinder element 3 is a trephine, i.e., with a toothed distal edge 20. The toothed edge is sometimes advantageous as compared to a scalpel edge 21, see figures 1, 2, 3, 5, and 6, and vice versa.

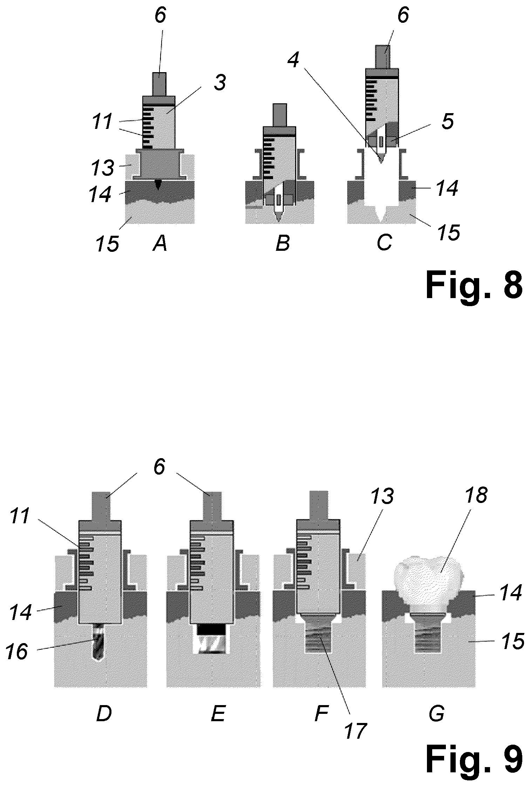

Finally, as shown in figures 8 and 9, in the procedure followed during the use of the scalpel for making dental implants of the invention, it is necessary to highlight the following stages during the guided surgery with a splint.
- Stage A: Placement of a splint 13 on the gum 14 where it is desired to place the implant and insertion of the device, so that the tip 4 of the first end 1 of the device of the invention rests centered in the space delimited by the splint 13.
- Stage B: Circular cutting of the gum 14 to access the bone 15.
- Stage C: Extraction of the cut fragments of the gingiva and cortical regularization of the bone 15.
- Stages D and E: Milling. For this, the tip 4 of the device is replaced by a drill 16 that acts as a pilot during the placement of the implant 17. Advantageously, the distance markings 11 included in the cylinder element 3 of the device of the invention allows the user to be guided during surgical surgery.
- Stage F: The device allows for the placement of the implant 17.
- Stage G: Final placement of the tooth 18 on the implant 17.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A device for preparing for dental implants, comprising an elongate structure that has a first end (1) with a tip (4), wherein a set of cutting fins (5) are arranged on the structure adjacent the first end (1), and a second end (2) with a connecting part (6) adapted to be coupled to a rotating device for rotating the device such that the first end (1) of the elongate structure is arranged coaxially inside a cylinder element (3);
wherein the set of cutting fins (5) comprises three fins evenly arranged around the elongate structure at an angle of 120° between them, and wherein the outer ends (10) of the cutting fins (5) are linked to the inner surface of the cylinder element,
**characterized by** a second set with three cutting fins arranged around the elongate structure at an angle of 120° between them and arranged between the first set of cutting fins (5) and the second end (2) at a distance from the first set of cutting fins (5).

2. The device according to claim 1, wherein the fins of the two sets are arranged around the elongate structure such that the fins of the first set is arranged at a rotational angle of 60° relative the fins of the second set.

3. The device according to any of claim 1 or 2, wherein the cutting fins (5) have cutting edges (7) towards the first end of the elongate structure.

4. The device according to claim 3, wherein the cutting fins (5) comprise truncated pyramidal bodies with rectangular bases arranged towards the second end (2) of the device, further comprising slanted lateral faces (7a) and top surfaces (7b) of the cutting edges (7) arranged towards the first end of the device.

5. The device according to claim 4, wherein lateral faces (7a) of the truncated pyramidal bodies are curved concave planes.

6. The device according to any of the preceding claims, wherein the first end (1) of the elongate structure has an annular extension (8), the cylinder element (3) having an internal space (9) and a seat (9a) extending inwardly from the inner surface of the cylinder element (3) and corresponding to the annular extension (8), wherein the cylinder element (3) and the annular extension (8) are arranged such that coaxial movement of the cylinder element (3) relative the elongate structure is limited upon contact between the annular extension (8) and the seat (9a) .

7. The device according to any of the preceding claims, wherein the cylinder element (3) has distance markings (11).

8. The device according to any of the preceding claims, wherein the first end (1) of the elongate structure and cylinder element (3) have respective threaded surfaces (12), such that the elongate structure and the cylinder element (3) are arranged to be screwed together such that the first end (1) of the elongate structure is disposed coaxially inside the bushing (3).

9. The device according to any of the claims 1 to 7, wherein the device is a scalper; and
wherein the first end (1) of the elongate structure and the cylinder element (3) have respective adherent surfaces, such that the first end (1) of the elongate structure is joined coaxially inside the cylinder element (3).

10. The device according to any of the claims 1 to 7, wherein the device is a trephine, and wherein the first end (1) of the elongate structure and the cylinder element (3) have respective adherent surfaces, such that the first end (1) of the elongate structure is joined coaxially inside the cylinder element (3).

## Patentansprüche

1. Eine Vorrichtung zur Vorbereitung von Zahnimplantaten, die eine längliche Struktur umfasst, die ein erstes Ende (1) mit einer Spitze (4) aufweist, wobei eine Anordnung von Schneidlamellen (5) an der Struktur benachbart zum ersten Ende (1) angeordnet ist, sowie ein zweites Ende (2) mit einem Verbindungsteil (6), das dazu ausgelegt ist, mit einer Drehvorrichtung gekoppelt zu werden, um die Vorrichtung so zu drehen, dass das erste Ende (1) der länglichen Struktur koaxial innerhalb eines Zylinderelements (3) angeordnet ist;
wobei der Satz von Schneidlamellen (5) drei Lamellen umfasst, die gleichmäßig um die längliche Struktur herum in einem Winkel von 120° zueinander angeordnet sind, und wobei die äußeren Enden (10) der Schneidlamellen (5) mit der Innenfläche des Zylinderelements verbunden sind,
**gekennzeichnet durch** einen zweiten Satz mit drei Schneidlamellen, die um die längliche Struktur herum in einem Winkel von 120° zueinander angeordnet sind und zwischen dem ersten Satz von Schneidlamellen (5) und dem zweiten Ende (2) in einem Abstand zum ersten Satz von Schneidlamellen (5) angeordnet sind.

2. Die Vorrichtung nach Anspruch 1, wobei die Lamellen der beiden Sätze so um die längliche Struktur angeordnet sind, dass die Lamellen des ersten Satzes in einem Drehwinkel von 60° relativ zu den Lamellen des zweiten Satzes angeordnet sind.

3. Die Vorrichtung nach Anspruch 1 oder 2, wobei die Schneidlamellen (5) zum ersten Ende der länglichen Struktur hin gerichtete Schneidkanten (7) aufweisen.

4. Die Vorrichtung nach Anspruch 3, wobei die Schneidlamellen (5) Pyramidenstümpfe mit rechteckigen Grundflächen umfassen, die zum zweiten Ende (2) der Vorrichtung hin angeordnet sind, und ferner schräge Seitenflächen (7a) und Oberseiten (7b) der Schneidkanten (7) umfassen, die zum ersten Ende der Vorrichtung hin angeordnet sind.

5. Die Vorrichtung nach Anspruch 4, wobei die Seitenflächen (7a) der Pyramidenstümpfe konkav gekrümmte Ebenen sind.

6. Die Vorrichtung nach einem der vorstehenden Ansprüche, wobei das erste Ende (1) der länglichen Struktur einen ringförmigen Fortsatz (8) aufweist, wobei das Zylinderelement (3) einen Innenraum (9) und einen Sitz (9a) aufweist, der sich von der Innenfläche des Zylinderelements (3) nach innen erstreckt und dem ringförmigen Fortsatz (8) entspricht und wobei das Zylinderelement (3) und der ringförmige Fortsatz (8) so angeordnet sind, dass eine koaxiale Bewegung des Zylinderelements (3) relativ zur länglichen Struktur bei Kontakt zwischen dem ringförmigen Fortsatz (8) und dem Sitz (9a) begrenzt wird.

7. Die Vorrichtung nach einem der vorstehenden Ansprüche, wobei das Zylinderelement (3) Abstandsmarkierungen (11) aufweist.

8. Die Vorrichtung nach einem der vorstehenden Ansprüche, wobei das erste Ende (1) der länglichen Struktur und das Zylinderelement (3) jeweils Gewindeflächen (12) aufweisen, so dass die längliche Struktur und das Zylinderelement (3) so angeordnet sind, dass sie miteinander verschraubt werden können und wobei das erste Ende (1) der länglichen Struktur koaxial innerhalb des Zylinderelements (3) angeordnet ist.

9. Die Vorrichtung nach einem der Ansprüche 1 bis 7, wobei es sich bei der Vorrichtung um einen Schälapparat handelt; und wobei das erste Ende (1) der länglichen Struktur und das Zylinderelement (3) jeweils aneinander haftende Oberflächen aufweisen, sodass das erste Ende (1) der länglichen Struktur koaxial im Inneren des Zylinderelements (3) verbunden ist.

10. Die Vorrichtung nach einem der Ansprüche 1 bis 7, wobei es sich bei der Vorrichtung um einen Trepan handelt und wobei das erste Ende (1) der länglichen Struktur und das Zylinderelement (3) jeweils aneinanderliegende Oberflächen aufweisen, so dass das erste Ende (1) der länglichen Struktur koaxial im Inneren des Zylinderelements (3) verbunden ist.

## Revendications

1. Dispositif de préparation d'implants dentaires, comprenant une structure allongée qui présente une première extrémité (1) avec une pointe (4), où un ensemble d'ailettes de coupe (5) sont agencées sur la structure de manière adjacente à la première extrémité (1), et une seconde extrémité (2) ayant une partie de liaison (6) conçue pour être couplée à un dispositif rotatif pour faire tourner le dispositif de telle sorte que la première extrémité (1) de la structure allongée est agencée coaxialement à l'intérieur d'un élément cylindrique (3) ;
où l'ensemble d'ailettes de coupe (5) comprend trois ailettes régulièrement agencées autour de la structure allongée à un angle de 120° entre elles, et où les extrémités extérieures (10) des ailettes de coupe (5) sont liées à la surface intérieure de l'élément cylindrique,
**caractérisé par** un second ensemble de trois ailettes de coupe agencées autour de la structure allongée à un angle de 120° entre elles et agencées entre le premier ensemble d'ailettes de coupe (5) et la seconde extrémité (2) à une certaine distance du premier ensemble d'ailettes de coupe (5).

2. Dispositif selon la revendication 1, dans lequel les ailettes des deux ensembles sont agencées autour de la structure allongée de telle sorte que les ailettes du premier ensemble sont agencées à un angle de rotation de 60° par rapport aux ailettes du second ensemble.

3. Dispositif selon l'une quelconque des revendications 1 et 2, dans lequel les ailettes de coupe (5) présentent des arêtes de coupe (7) en direction de la première extrémité de la structure allongée.

4. Dispositif selon la revendication 3, dans lequel les ailettes de coupe (5) comprennent des corps pyramidaux tronqués ayant des bases rectangulaires agencées en direction de la seconde extrémité (2) du dispositif, comprenant en outre des faces latérales inclinées (7a) et des surfaces supérieures (7b) des arêtes de coupe (7) agencées en direction de la première extrémité du dispositif.

5. Dispositif selon la revendication 4, dans lequel des faces latérales (7a) des corps pyramidaux tronqués sont des plans incurvés concaves.

6. Dispositif selon l'une quelconque des revendications précédentes, dans lequel la première extrémité (1) de la structure allongée présente une extension annulaire (8), l'élément cylindrique (3) présentant un espace interne (9) et un siège (9a) s'étendant vers l'intérieur depuis la surface intérieure de l'élément cylindrique (3) et correspondant à l'extension annulaire (8), où l'élément cylindrique (3) et l'extension annulaire (8) sont agencés de telle sorte qu'un déplacement coaxial de l'élément cylindrique (3) par rapport à la structure allongée est limité par le contact entre l'extension annulaire (8) et le siège (9a).

7. Dispositif selon l'une quelconque des revendications précédentes, dans lequel l'élément cylindrique (3) présente des marquages de distance (11).

8. Dispositif selon l'une quelconque des revendications précédentes, dans lequel la première extrémité (1) de la structure allongée et l'élément cylindrique (3) présentent des surfaces filetées respectives (12), de telle sorte que la structure allongée et l'élément cylindrique (3) sont agencés pour être vissés ensemble de telle sorte que la première extrémité (1) de la structure allongée est disposée coaxialement à l'intérieur de la douille (3).

9. Dispositif selon l'une quelconque des revendications 1 à 7, où le dispositif est une fraise ; et
où la première extrémité (1) de la structure allongée et l'élément cylindrique (3) présentent des surfaces adhérentes respectives, de telle sorte la première extrémité (1) de la structure allongée est reliée coaxialement à l'intérieur de l'élément cylindrique (3).

10. Dispositif selon l'une quelconque des revendications 1 à 7, où le dispositif est un trépan, et où la première extrémité (1) de la structure allongée et l'élément cylindrique (3) présentent des surfaces adhérentes respectives, de telle sorte que la première extrémité (1) de la structure allongée est reliée coaxialement à l'intérieur de l'élément cylindrique (3).
